# EUROPÄISCHE PATENTSCHRIFT

(11) **EP 3 746 323 B1**
(45) Veröffentlichungstag und Bekanntmachung des Hinweises auf die Patenterteilung: **24.07.2024**
(21) Anmeldenummer: 19705111.3
(22) Anmeldetag: 01.02.2019
(51) Int. Cl.: B60K 6/48, B60K 6/405, B60K 6/547, B60W 10/08, B60W 10/11, B60W 10/111, B60W 20/15, B60W 20/30, B60W 30/19, B60K 6/40

(54) **KRAFTFAHRZEUG MIT NACHGERÜSTETEM ELEKTRISCHEN ANTRIEB**
MOTOR VEHICLE WITH RETROFITTED ELECTRIC DRIVE
VÉHICULE AUTOMOBILE AVEC KIT D'ADAPTATION COMPRENANT UN MOTEUR ÉLECTRIQUE

(30) Priorität: 02.02.2018 DE 102018201614
(43) Veröffentlichungstag der Anmeldung: 09.12.2020
(73) Patentinhaber: Heidl, Roland, 40233 Düsseldorf (DE)
(72) Erfinder: Heidl, Roland, 40233 Düsseldorf (DE)
(74) Vertreter: Gille Hrabal Partnerschaftsgesellschaft mbB Patentanwälte
(86) Internationale Anmeldenummer: PCT/EP2019/052459
(87) Internationale Veröffentlichungsnummer: WO 2019/149866

(56) Entgegenhaltungen:
- WO-A1-2012/137151
- WO-A1-2013/113907
- WO-A2-2010/135027
- DE-A1- 102012 214 457
- KR-B1- 101 454 868
- KR-B1- 101 454 868
- US-A1- 2009 018 716
- US-A1- 2011 000 721
- US-A1- 2011 083 309
- US-A1- 2011 306 463
- US-A1- 2013 152 732
- US-A1- 2015 298 574

## Beschreibung

Die Erfindung betrifft ein Kraftfahrzeug mit Verbrennungsmotor.

Ein vorhandenes Kraftfahrzeug mit Verbrennungsmotor meint ein Kraftfahrzeug, welches durch einen Verbrennungsmotor angetrieben, also gefahren, wird und keinen Elektromotor für einen elektrischen Antrieb umfasst. Ein vorhandenes Fahrzeug umfasst zwar regelmäßig Elektromotoren zum Beispiel für ein Starten des Verbrennungsmotors (Anlasser) oder für Scheibenwischer. Solche Elektromotoren ermöglichen jedoch nicht das Fahren, also Antreiben, des Kraftfahrzeugs. Ein derartiger Elektromotor ist daher kein Elektromotor für einen elektrischen Antrieb im Sinne der vorliegenden Erfindung.

Bei einem Verbrennungsmotor eines vorhandenen Kraftfahrzeugs im Sinne der vorliegenden Erfindung wird ein Gemisch aus Kraftstoff und Luft zum Beispiel in Zylindern verbrannt, um dadurch im Zylinder beweglich gelagerte Kolben zu bewegen. Das zündfähige Gemisch wird dann durch einen Ansaug- und Verdichtungstakt in den Zylindern gebildet.

Ein solcher Verbrennungsmotor umfasst eine Kurbelwelle, die so mit den Kolben mittels Pleuelstangen gekoppelt ist, dass die Bewegungen der Kolben die Kurbelwelle drehen. Umgekehrt kann eine Drehbewegung der Kurbelwelle die Kolben antreiben, also hin und her bewegen.

Ein solcher Verbrennungsmotor dreht sich nicht gleichmäßig, da dieser Leertakte und Totpunkte durchläuft. Es ist deshalb an der Kurbelwelle eines solchen Verbrennungsmotors ein Schwungrad angebracht. Ein sich drehendes Schwungrad dreht sich aufgrund seiner Massenträgheit auch dann weiter, wenn der Verbrennungsmotor Leertakte und Totpunkte durchläuft. Durch das Schwungrad werden daher Drehzahlschwankungen des Verbrennungsmotors ausgeglichen.

Eine Kurbelwelle eines Verbrennungsmotors muss sich drehen, damit die Kolben der einzelnen Zylinder die Ansaug- und Verdichtungstakte durchlaufen können. Die dafür notwendige Drehbewegung wird beim Start durch einen elektrischen Anlasser erzeugt, der auch Starter genannt wird.

Ein Anlasser wird in der Regel in der Nähe des Schwungrads angeordnet. Für ein Starten wird die Welle des Anlassers mit dem Schwungrad durch eine Kupplung gekuppelt, die nachfolgend Anlasser-Schwungrad-Kupplung genannt wird. Eine übliche Anlasser-Schwungrad-Kupplung umfasst einen Magnetschalter, der für ein Einkuppeln ein Ritzel ausgehend von einer Ausgangsposition in eine mit dem Schwungrad verzahnte Stellung verschiebt. Sobald dieses Ritzel des Anlassers mit dem Schwungrad verzahnt wurde, wird der Elektromotor des Anlassers aktiviert, um dann über das Ritzel die Kurbelwelle zu drehen. Es werden so die Kolben bewegt. Zündfähige Gemische werden dadurch in den Zylindern erzeugt und gezündet. Ist der Verbrennungsmotor so gestartet worden, so wird das Ritzel wieder in seine Ausgangsposition verschoben, beispielsweise mithilfe einer vorgespannten Feder der Anlasser-Schwungrad-Kupplung. Die Anlasser-Schwungrad-Kupplung kuppelt derart ein und aus, dass nur für ein Starten des Verbrennungsmotors ein Drehmoment von dem Elektromotor auf das Schwungrad übertragen wird.

Regelmäßig befindet sich das Schwungrad innerhalb eines Gehäuses, in dem auch das Getriebe untergebracht ist. In einem solchen Fall ist der Anlasser häufig an diesem Getriebegehäuse befestigt. Der Anlasser kann aber auch an dem Gehäuse befestigt sein, in dem sich der Motor befindet.

Ein Verbrennungsmotor bzw. seine Kurbelwelle ist mit einem Getriebe mittels einer Kupplung, die nachfolgend Kurbelwelle - Getriebe - Kupplung genannt wird, gekuppelt, um die Drehzahl der Kurbelwelle und damit die Drehzahl des Verbrennungsmotors in für ein Fahren des Kraftfahrzeugs geeignete Antriebsdrehzahl umzuwandeln. Durch die Kurbelwelle - Getriebe - Kupplung kann die Übertragung einer Drehbewegung von der Kurbelwelle auf das Getriebe unterbrochen werden. Die Kurbelwelle ist dann mit einem Getriebe nicht gekuppelt, also ausgekuppelt, und das Getriebe ist unabhängig vom Verbrennungsmotor. Eine Drehbewegung der Kurbelwelle wird dann nicht auf eine Welle des Getriebes übertragen.

Insbesondere ältere Kraftfahrzeuge mit Verbrennungsmotor verursachen während ihres Betriebs einen hohen Schadstoffausstoß. Kraftfahrzeuge mit Verbrennungsmotor dürfen regelmäßig nicht mehr in Großstädten gefahren werden, wenn der Schadstoffausstoß vorgegebene Grenzwerte überschreitet.

Aus dem Stand der Technik ist zur Lösung von derartigen Umweltproblemen bekannt, vorhandene Kraftfahrzeuge mit Verbrennungsmotor nachträglich mit einem zusätzlichen elektrischen Antrieb auszurüsten. So offenbart die Druckschrift DE 20 2017 002 410 U1 einen elektrischen Zusatzantrieb für vorhandene Fahrzeuge mit Antrieb auf einer Achse. Der zusätzliche Antrieb mit einem oder zwei Elektromotoren wird an der bisher nicht angetriebenen Achse eingebaut. Der Elektroantrieb wird so ausgelegt, dass innerhalb einer Innenstadt nur noch mit reinem Elektroantrieb gefahren werden kann.

Die Druckschrift WO 2007/023001 A1 offenbart das Ersetzen einer Lichtmaschine durch einen elektrischen Antrieb, um so ein vorhandenes Kraftfahrzeug mit Verbrennungsmotor mit einem elektrischen Antrieb nachzurüsten. Aus dieser Druckschrift ist auch bekannt, dass dann ein Anlasser entfallen kann.

Ein vorhandenes Kraftfahrzeug mit Verbrennungsmotor zusätzlich mit einem Elektromotor zu versehen, ist aus der Druckschrift DE 10 2008 032 286 A1 bekannt.

Die Druckschrift DE 10 2012 214 457 A1 offenbart ein Antriebssystem für ein Kraftfahrzeug mit einer Brennkraftmaschine, einem Getriebe für die Brennkraftmaschine und einer Elektromaschine. Ein Verfahren für ein Nachrüsten ist aus der Druckschrift WO 2012/137151 A1 bekannt.

Soll ein vorhandenes Kraftfahrzeug mit Verbrennungsmotor zusätzlich mit einem Elektromotor nachgerüstet werden, so sind diverse Anforderungen zu beachten. Ein Elektromotor sollte möglichst nicht den benötigen Bauraum vergrößern, da in vorhandenen Fahrzeugen generell kaum freier Bauraum zur Verfügung steht. Insbesondere bei sehr alten Fahrzeugen, die ab Überschreiten einer bestimmten Altersgrenze von zum Beispiel 30 Jahren auch Oldtimer genannt werden, soll der Originalzustand so wenig wie möglich geändert werden. Ein nachgerüstetes Kraftfahrzeug sollte rein elektrisch betrieben werden können, um dieses problemlos auch in Innenstädten fahren zu können.

Es ist Aufgabe der Erfindung, ein Kraftfahrzeug mit Verbrennungsmotor nachzurüsten, welches ein oder mehrere der vorgenannten Anforderungen erfüllt. Es soll vorzugsweise auch möglich sein, mit geringem Aufwand den Originalzustand wieder herstellen zu können.

Die Aufgabe der Erfindung wird durch ein Kraftfahrzeug mit den Merkmalen des ersten Anspruchs gelöst.

Die vorliegende Erfindung bezieht sich gemäß Anspruch 1 auf ein Kraftfahrzeug. Das Kraftfahrzeug wurde erhalten, indem ein vorhandenes Kraftfahrzeug, das mit einem Verbrennungsmotor angetrieben wird, mit einem zusätzlichen elektrischen Antrieb nachgerüstet worden ist. Ein dafür vorgesehener Nachrüstsatz umfasst einen Elektromotor für ein Antreiben des Kraftfahrzeugs, ein Getriebegehäuse mit Eingriffsfenster oder ein Teil eines Getriebegehäuses mit Eingriffsfenster. Der Elektromotor für ein Antreiben des Kraftfahrzeugs im Sinne der vorliegenden Erfindung wird nachfolgend auch E-Motor genannt. Der Nachrüstsatz umfasst außerdem eine Kupplung, durch die der E-Motor mit einem Gang eines Getriebes gekuppelt werden kann. Diese Kupplung wird nachfolgend E-Motor - Getriebe - Kupplung genannt.

Außerdem umfasst das Kraftfahrzeug eine Steuereinrichtung, die während eines rein elektrischen Fahrens einen Schalthebel der Gangschaltung fixiert.

Das Eingriffsfenster ermöglicht es, dass der E-Motor durch das Eingriffsfenster hindurch mit einem Gang des Getriebes mithilfe der E-Motor - Getriebe - Kupplung gekuppelt werden kann. Das Eingriffsfenster ist daher eine geeignet groß dimensionierte Gehäuseöffnung.

Ein E-Motor im Sinne der vorliegenden Erfindung ist so ausgelegt, dass mit dem E-Motor ein Kraftfahrzeug rein elektrisch gefahren werden kann und zwar mit einer Geschwindigkeit von mehreren 10 km/h. Es handelt sich folglich um einen Elektromotor mit entsprechend hoher Leistungsdichte. Rein elektrisches Fahren meint, dass das Kraftfahrzeug ohne Verbrennungsmotor gefahren, also angetrieben, werden kann. Vorzugsweise werden durch den E-Motor Geschwindigkeiten von wenigstens 50 km/h ermöglicht. Nach einem Umrüsten kann das Kraftfahrzeug also rein elektrisch mit einer Geschwindigkeit von mindestens 50 km/h gefahren werden. Vorzugsweise erlaubt der E-Motor Geschwindigkeiten von wenigstens 70 km/h.

Die Geschwindigkeitsangaben beziehen sich insbesondere auf Kraftfahrzeuge mit einem Leergewicht von wenigstens 500 kg, vorzugsweise von wenigstens 1000 kg, besonders bevorzugt von wenigstens 1500 kg. Der Elektromotor und die E-Motor - Getriebe - Kupplung sind dann so ausgelegt, dass ein solches Kraftfahrzeug wenigstens 50 km/h schnell, vorzugsweise wenigstens 70 km/h schnell fahren kann und zwar dauerhaft. Dauerhaft meint, dass eine Fahrt nicht wegen Überlastung von E-Motor oder E-Motor - Getriebe - Kupplung, die den E-Motor mit einem Gang des Getriebes verbindet, unterbrochen werden muss.

In einer Ausgestaltung sind E-Motor und E-Motor - Getriebe - Kupplung so vorgesehen, dass ein damit ausgerüstetes Kraftfahrzeug nicht schneller als 80 km/h schnell fahren kann. Dies gilt insbesondere für Kraftfahrzeuge mit einem Leergewicht von nicht mehr als 2000 kg.

Der E-Motor kann außerdem als Anlasser für den Verbrennungsmotor des vorhandenen Kraftfahrzeuges dienen. Ein Anlasser des vorhandenen Kraftfahrzeugs kann daher durch den E-Motor ersetzt werden. Hierdurch wird eine Bauraumvergrößerung im Vergleich zum Originalzustand durch das Nachrüsten vermieden oder zumindest sehr gering gehalten.

Der Nachrüstsatz umfasst in einer Ausgestaltung elektrische Leiter nebst elektrischen Anschlüssen, die ein Verbinden des E-Motors mit einer Batterie ermöglichen. Der Nachrüstsatz umfasst in einer Ausgestaltung eine Batterie mit einer Batteriekapazität von wenigstens 3 kWh, vorzugsweise von wenigstens 5 kWh, besonders bevorzugt von wenigstens 10 kWh. Derartige Batteriekapazitäten erlauben grundsätzlich ein rein elektrisches Fahren von zumindest 20 km und damit Distanzen, die in Innenstädten zurückgelegt werden.

In einer Ausgestaltung der Erfindung ist die Batterie nicht schwerer als 100 kg, bevorzugt nicht schwerer als 70 kg, besonders bevorzugt nicht schwerer als 60 kg, um das Gewicht eines nachgerüsteten Fahrzeugs nicht in kritischer Weise zu erhöhen.

In einer Ausgestaltung der Erfindung wird die Batterie im Kofferraum und/oder hinter und/oder unter einem Sitz eines vorhandenen Fahrzeugs eingebaut. Alternativ oder ergänzend wird die Batterie in einer Reserverad - Mulde eingebaut. Das Reserverad entfällt bei dieser Ausgestaltung. Insbesondere werden Batterien in einem Fahrzeug verteilt eingebaut, also beispielsweise sowohl in einem Kofferraum als auch unter und/oder hinter ein oder mehreren Sitzen innerhalb der Fahrgastzelle und/oder in einer für ein Reserverad vorgesehenen Mulde, um eine gute Gewichtsverteilung zu erzielen. Werden Batterien verteilt eingebaut, so ist deren Gesamtgewicht vorzugsweise ebenfalls nicht schwerer als 100 kg, bevorzugt nicht schwerer als 70 kg, besonders bevorzugt nicht schwerer als 60 kg. Die Gesamtkapazität beträgt dann vorzugsweise wenigstens 3 kWh, vorzugsweise wenigstens 5 kWh, besonders bevorzugt wenigstens 10 kWh. Die Fahrgastzelle ist der Innenraum eines Kraftfahrzeug, der dem Personentransport dient und in dem sich daher die Sitze für die Personen befinden. "Hinter Sitzen" meint von dem jeweiligen Sitz aus gesehen entgegengesetzt zur Vorwärtsfahrtrichtung des Kraftfahrzeugs.

Der E-Motor kann als Generator zum Laden der Batterie dienen. Beispielsweise kann der E-Motor ein Bremsen unterstützen und dabei elektrische Energie erzeugen, mit der dann eine Batterie geladen wird. Der Nachrüstsatz umfasst unter anderem deshalb in einer Ausgestaltung eine elektronische Steuerungseinrichtung sowie elektrische Leiter für ein Verbinden des E-Motors mit einer Batterie, die das Laden einer Batterie steuern kann.

Der Nachrüstsatz umfasst in einer Ausgestaltung eine elektronische Steuerungseinrichtung, mit der das Aufladen einer Batterie sowie die Entnahme von elektrischer Leistung für ein elektrisches Fahren eines Kraftfahrzeugs gesteuert werden kann. Dies trägt dazu bei, dass im Anschluss an ein Nachrüsten durch den Nachrüstsatz ein Kraftfahrzeug rein elektrisch fahren kann.

Der Nachrüstsatz umfasst in einer Ausgestaltung Verbindungsmittel für ein Verbinden der Steuerungseinrichtung mit einem vorhandenen Gaspedal, die derart beschaffen sind, dass die Entnahme von elektrischer Leistung in Abhängigkeit von der Stellung des Gaspedals gesteuert wird. Fahrgeschwindigkeiten können so in vertrauter Weise durch einen Fahrer des Kraftfahrzeugs gesteuert werden. Mit vorhandenem Gaspedal ist das Gaspedal gemeint, welches im vorhandenen Kraftfahrzeug bereits vor der Nachrüstung vorhanden war.

In einer Ausgestaltung umfasst der Nachrüstsatz eine Schalteinrichtung, mit der das Einund Auskuppeln des E-Motors gesteuert werden kann. Die Schalteinrichtung umfasst grundsätzlich wenigstens drei Betätigungselemente oder wenigstens drei Betätigungsmöglichkeiten für ein rein elektrisches Vorwärtsfahren, ein rein elektrisches Rückwärtsfahren und einer neutralen Stellung. In der neutralen Stellung befindet sich die E-Motor - Getriebe Kupplung in der ausgekuppelten Stellung. Eine Drehbewegung der Welle des E-Motors kann dann nicht auf eine Welle des Getriebes übertragen werden. In den beiden anderen Stellungen befindet sich die E-Motor - Getriebe Kupplung in einer eingekuppelten Stellung und zwar vorzugsweise in der gleichen eingekuppelten Stellung. Befindet sich die E-Motor - Getriebe Kupplung in den beiden anderen Stellungen immer in der gleichen eingekuppelten Stellung, so wird der E-Motor so angesteuert, dass dieser sich in umgekehrter Richtung dreht, wenn in umgekehrter Richtung gefahren werden soll. Wird so betätigt, dass vorwärts oder rückwärts gefahren werden kann, dann wird das Getriebe vorzugweise in eine neutrale Stellung gebracht, so dass kein Gang im klassischen Sinn für ein Fahren mit dem Verbrennungsmotor eingelegt ist. Der technische Aufwand kann so gering gehalten werden. Auch werden unnötige Leistungsverluste vermieden.

Vorzugsweise umfasst der E-Motor Befestigungsmittel für einen Anbau am Getriebegehäuse. Der Abstand zwischen dem E-Motor und dem Getriebe wird vorteilhaft so gering gehalten. Der technische Aufwand für ein Nachrüsten sowie der benötigte Bauraum können damit gering gehalten werden.

Insbesondere umfassen die Befestigungsmittel des E-Motors einen Flansch mit Bohrungen, um den E-Motor an einem Gehäuse mithilfe von Schrauben festschrauben zu können. Der Flansch ist dann insbesondere so beschaffen, wie dies bei einem zuvor vorhandenen Anlasser bei einem vorhandenen Fahrzeug bereits der Fall war. Der E-Motor wird also dann in gleicher Weise und an gleicher Stelle befestigt wie der Anlasser bei einem vorhandenen Kraftfahrzeug. Der technische Aufwand wird so weiter gering gehalten. Ein durch das Nachrüsten erforderlicher vergrößerter Bauraum wird so weiter verbessert vermieden.

In einer Ausgestaltung umfasst die E-Motor - Getriebe - Kupplung des Nachrüstsatzes ein Antriebs-Zahnrad wie zum Beispiel ein Antriebs-Ritzel, welches in das Getriebe eines vorhandenen Kraftfahrzeuges, also das Originalgetriebe, für ein rein elektrisches Fahren eingreifen kann. Durch das Antriebs-Zahnrad kann der Elektromotor mit technisch geringem Aufwand mit dem Getriebe so gekuppelt werden, dass ein rein elektrisches Fahren mit einer Geschwindigkeit von mehreren 10 km/h möglich ist.

In einer Ausgestaltung überträgt die E-Motor - Getriebe - Kupplung ein Drehmoment auf ein Losrad einer Eingangswelle des Getriebes oder auf ein Festrad der Triebwelle.

Ein Losrad einer Getriebeeingangswelle ist ein Gangrad des Getriebes, welches drehfest mit der Getriebeeingangswelle verbunden werden kann. Das Losrad einer Getriebeeingangswelle kann sich aber auch in einer Stellung befinden, in welcher es nicht drehfest mit der Getriebeeingangswelle verbunden ist und sich also Getriebeeingangswelle und Losrad unabhängig voneinander drehen können. Bei einem derartigen Getriebe ist ein solches Losrad dauerhaft mit einem Festrad der Triebwelle des Getriebes verzahnt. Im eingekuppelten Zustand der Kurbelwelle - Getriebe - Kupplung wird eine Drehbewegung der Kurbelwelle auf die Getriebeeingangswelle übertragen. Ist dann das Losrad drehfest mit der Getriebeeingangswelle verbunden, so wird aufgrund der Verzahnung mit dem Festrad diese Drehbewegung auf die Triebwelle übertragen. Die Drehbewegung der Triebwelle wird wiederum auf die Räder des zugehörigen Kraftfahrzeugs übertragen. Soll rein elektrisch gefahren werden, so genügt es, die E-Motor - Getriebe - Kupplung mit dem Losrad der Getriebeeingangswelle zu koppeln, um so ein Kraftfahrzeug rein elektrisch fahren zu können. Um besonders einfach und ohne Leistungsverluste rein elektrisch fahren zu können, wird ein rein elektrisches Fahren vorteilhaft so gesteuert, dass dann kein Gang so eingelegt ist, dass eine Drehbewegung von der Getriebeeingangswelle auf die Triebwelle übertragen werden kann. Insbesondere befindet sich dann das Losrad in der Stellung, in der es nicht drehfest mit der Getriebeeingangswelle verbunden ist.

Ein Festrad der Triebwelle ist ein Gangrad des Getriebes, welches dauerhaft drehfest mit der Triebwelle verbunden ist. Bei einem derartigen Getriebe ist ein solches Festrad der Triebwelle nicht dauerhaft mit einem Gangrad der Getriebeeingangswelle des Getriebes verzahnt. Im eingekuppelten Zustand der Kurbelwelle - Getriebe - Kupplung wird eine Drehbewegung der Kurbelwelle auf die Getriebeeingangswelle übertragen. Ist dann das Festrad der Triebwelle relativ zu einem zugehörigen Gangrad der Getriebeingangswelle geeignet verschoben worden, so wird aufgrund der dann vorliegenden Verzahnung eine Drehbewegung der Getriebeingangswelle auf die Triebwelle übertragen. Die Drehbewegung der Triebwelle wird wiederum auf die Räder des zugehörigen Kraftfahrzeugs übertragen. Soll rein elektrisch gefahren werden, so genügt es, die E-Motor - Getriebe - Kupplung mit dem Festrad der Triebwelle zu koppeln, um so ein Kraftfahrzeug rein elektrisch fahren zu können. Um besonders einfach und ohne Leistungsverluste rein elektrisch fahren zu können, wird ein rein elektrisches Fahren vorteilhaft dann so gesteuert, dass dann kein Gang so eingelegt ist, dass eine Drehbewegung von der Getriebeeingangswelle auf die Triebwelle übertragen werden kann. Insbesondere befindet sich dann das Festrad in der Stellung, in der es nicht mit einem Gangrad der Getriebeeingangswelle verzahnt ist.

Gemäß der Erfindung wird durch eine entsprechende Steuereinrichtung während eines rein elektrischen Fahrens ein Schalthebel der Gangschaltung fixiert. Es wird so vermieden, dass ein Benutzer versehentlich einen Gang in einer dann nachteilhaften Weise einlegen kann.

In einer Ausgestaltung der Erfindung ist der E-Motor so beschaffen, dass die für seinen Betrieb vorgesehene Spannung wenigstens 30 Volt, vorzugsweise wenigstens 40 Volt, besonders bevorzugt 48 Volt beträgt, um unnötig große Leitungsquerschnitte von zugehörigen elektrischen Leitern zu vermeiden.

Vorzugsweise beträgt die elektrische Spannung, die für den Betrieb des E-Motors erforderlich ist, nicht mehr als 100 V, so zum Beispiel 96 Volt, besonders bevorzugt nicht mehr als 60 V, damit keine zusätzlichen elektrischen Sicherheitsvorkehrungen getroffen werden müssen. Auch dies trägt dazu bei, den technischen Aufwand gering zu halten, und einen vergrößerten Bauraumbedarf zu vermeiden.

Gängige Bauformen der Fahrzeuge haben den Anlasser entweder entlang des Getriebegehäuses liegen oder entlang des Motorgehäuses (auch Motorblock oder Kurbelgehäuse genannt).

Liegt der Anlasser entlang des Getriebegehäuses (z.B. Bauform Porsche), weist der E-Motor in einer Ausführungsform zwei Wellenenden auf, die für einen Abtrieb vorgesehen und eingerichtet sind. Das eine erste Wellenende ist grundsätzlich mit einem üblichen Anlasserritzel ausgestattet und greift im montierten Zustand zum Anlassen in den Anlasser-Zahnkranz der Schwungscheibe bzw. des Schwungrads ein. Der E-Motor kann dann den Verbrennungsmotor starten, also anlassen. Diese Funktion ist dann identisch mit dem Anlasser beim vorhandenen Fahrzeug. Zum Anlassen des Verbrennungsmotors dient also das erste Wellenende, welches in der Regel flansch-seitig angeordnet ist.

Das zweite Wellenende überträgt im Fahrbetrieb das Drehmoment des E-Motors auf das Fahrzeug-Getriebe und zwar auf eines der Gangräder des Getriebes. In einer technisch einfachen Ausgestaltung ist das zweite Ende der Welle ebenfalls mit einem für den Antrieb vorgesehenen Zahnrad versehen. Es kann sich ebenfalls um ein Ritzel handeln, welches nachfolgend Fahrritzel genannt wird.

In einer vorteilhaften Ausgestaltung wird die ursprüngliche Anlasserkupplung als E-Motor-Schwungrad-Kupplung ganz oder teilweise weiter verwendet, um so den technischen Aufwand weiter verbessert gering zu halten. Anlasserkupplung und E-Motor-Schwungrad-Kupplung können also identisch sein. Grundsätzlich sind die beiden Kupplungen baugleich oder zumindest im Wesentlichen baugleich. Wird eine Anlasserkupplung, die beim vorhandenen Kraftfahrzeug den Anlasser mit der Schwungscheibe bzw. dem Schwungrad für ein Starten kuppeln konnte, nicht weiter verwendet, so wird also vorzugsweise eine E-Motor - Schwungrad - Kupplung vorgesehen, die baugleich mit der ursprünglichen Anlasserkupplung ist, um den Änderungsaufwand zu minimieren. Die E-Motor - Schwungrad - Kupplung überträgt im eingekuppelten Zustand eine Drehbewegung der Welle des E-Motors auf das Schwungrad für ein Starten des Verbrennungsmotors.

Zum Einrasten des Anlasserritzels auf der einen Seite und des Fahrritzels auf der anderen Seite sind nachfolgende Ausgestaltungen besonders geeignet:
- Ausgestaltung 1: Am zweiten Wellenende des E-Motors wird, analog zum herkömmlichen Magnetschalter des Anlassers eine separat steuerbare Verschiebevorrichtung für das Antriebsritzel angebracht. Es gibt also zwei Ritzel mit je einer Verschiebeeinrichtung: eine für das Anlasserritzel, die andere für das Antriebsritzel. Die separat steuerbare Verschiebevorrichtung und das Antriebsritzel sind damit Bestandteil einer E-Motor - Getriebe - Kupplung, um den E-Motor mit einem Gangrad des Getriebes kuppeln zu können.
- Ausgestaltung 2: Eine zweigeteilte Motorwelle des E-Motors ist vorgesehen. Die zweigeteilte Motorwelle ist dann in zwei separate, konzentrisch laufende Wellen unterteilt, die in Längsrichtung gegeneinander verschiebbar und die über eine Längsverzahnung drehfest verbunden sind. Es gibt einen separat steuerbaren Verschiebe-Antrieb für den einen Teil der zweigeteilten Motorwelle derart, dass entweder das Anlasserritzel oder das Antriebsritzel in Arbeitsposition gebracht werden kann. Mit Arbeitsposition ist der eingekuppelte Zustand gemeint, der die Übertragung eines Drehmoments ermöglicht. Diese Ausgestaltung trägt dazu bei, eine E-Motor - Getriebe - Kupplung und/oder eine E-Motor - Anlasser - Kupplung bereitzustellen.

In einer Ausgestaltung wird zur Befestigung und Drehmomentabstützung an der Schwungscheibenseite eine Flanschverbindung für die Befestigung des E-Motors passend zum Anlasserflansch angeordnet. Der E-Motor wird also in gleicher Weise wie ein ursprünglich vorhandener Anlasserflansch montiert. Es wird außerdem eine zweite Befestigung zusätzlich vorgesehen. So wird beispielsweise abtriebsseitig am mittleren oder letzten Getriebegehäuse eine zweite Befestigung für den E-Motor vorgesehen, damit der E-Motor sicher am Getriebegehäuse fest sitzt. Die zweite Befestigung kann ebenfalls einen Flansch umfassen, der am Getriebegehäuse festgeschraubt wird. Besteht das Getriebegehäuse aus mehreren Teilen, so ist vorzugsweise das Teil des Gehäuses für eine solche Befestigung eingerichtet, welches das Eingriffsfenster umfasst. Der technische Aufwand wird so weiter verbessert gering gehalten.

Liegt der Anlasser in einer anderen Ausführungsform der Fahrzeuge (z.B. Mercedes) entlang des Motorgehäuses, genügt ein einziges Wellenende, auf welchem die beiden Ritzel für den Anlassvorgang per Schwungscheibe und für die Momenteneinleitung in das Getriebe sitzen. Die beiden Ritzel sind grundsätzlich wie in den obigen Ausführungsformen separat ansteuerbar, und auch der Krafteingriff ins Getriebe kann auf gleiche Weise wie bei der Ausführungsform mit Anordnung des E-Motors am Getriebegehäuse erfolgen.

Es gibt insbesondere die folgenden Betriebs-Funktionen:
- Der E-Motor treibt das Fahrzeug an. Die Maximalgeschwindigkeit beträgt nur ca. 70 km/h, da das Fahrzeug elektrisch vorzugsweise nur in der Innenstadt betrieben wird.
- Neben der Vorwärtsfahrt realisiert der E-Motor durch Umkehr seiner Drehrichtung die Rückwärtsfahrt. Dadurch wird nur ein Gang benötigt, mit dem der E-Motor gekuppelt werden kann.
- Der E-Motor wirkt im Schubbetrieb (z.B. beim Bremsen oder Gaswegnehmen) als Generator zur Energierekuperation.

Eine Krafteinleitung vom E-Motor in das Getriebe kann durch die folgenden Ausgestaltungen in technisch besonders einfacher Weise realisiert werden. Diese Komponenten können dann Bestandteile des Nachrüstsatzes sein.
- Zum Eingriff des Elektromotors in das Getriebe auf ein Gangrad des Getriebes wird das Eingriffsfenster in Form einer Öffnung im Getriebegehäuse vorgesehen.
- Ein axialer Versatz zwischen der Welle des E-Motors und einer Welle des Getriebes wie zum Beispiel der Eingangswelle des Getriebes werden in einer Ausgestaltung durch eine Zwischenwelle und ein Zwischenrad überbrückt. Zwischenwelle und ein Zwischenrad können dann also im Nachrüstsatz enthalten sein.
- Alternativ werden zur Überbrückung eines axialen Versatzes ein Kettentrieb, ein Schneckenantrieb oder eine Königswelle eingesetzt, die dann im Nachrüstsatz enthalten sein können.

Das Gehäuse des E-Motors ist vorteilhaft ein eigenständiges zylindrisches Gehäuse mit Befestigungsmitteln wie Lagerschilden, ähnlich einem Gehäuse eines Anlassers mit Magnetschalter. Ohne einen Bauraum vergrößern zu müssen, kann dann der E-Motor gegen einen Anlasser ausgetauscht werden.

In einer Ausgestaltung der Erfindung ist über dem Eingriffsfenster, also einer Öffnung im Getriebegehäuse, eine Haube oder eine Art Hutze angeordnet, die die Einrichtung zur Krafteinleitung ins Innere des Getriebegehäuses mitsamt den Wellendurchführungen, Zwischenzahnrädern oder der Kette abdichtet.

Die vorliegende Erfindung kann auf alle gängigen Schaltgetriebe sowie bei entsprechendem Modifikationsaufwand auch auf Automatikgetriebe angewendet werden.

Die vorliegende Erfindung kann für Benzin- und Dieselmotoren und für PKW und leichte LKW eingesetzt werden.

Der E-Motor kann in einer vorteilhaften Ausgestaltung durch eine Kühleinrichtung gekühlt werden. Vorzugsweise ist die Kühleinrichtung so beschaffen, dass das Motoröl des Verbrennungsmotors als Kühlflüssigkeit dient. Hierdurch wird das Motoröl einerseits auf Betriebstemperatur gehalten. Andererseits übernimmt es eine Zusatzfunktion, so dass auch dadurch der technische Aufwand sowie der benötigte Bauraum gering gehalten werden. Es kann bei dieser Ausgestaltung auch beim Kaltstart des Fahrzeuges ein Vorwärmen des Motoröls erreicht werden. In der Kaltstartphase wird vorzugsweise nur rein elektrisch gefahren. Erst beim Erreichen höherer Geschwindigkeiten oder nach Zurücklegen einer vorgegebenen Strecke wird der Verbrennungsmotor eingeschaltet, wodurch die Lebensdauer des Verbrennungsmotors verbessert wird.

Das Motoröl kann direkt oder indirekt als Kühlflüssigkeit dienen.

Um diese Ausgestaltung zu realisieren, werden in einer Ausgestaltung geeignete Verbindungsschläuche oder -Rohre zum Umlauf des Öls zwischen Öltank und E-Motor gelegt, wodurch eine separate Kühleinrichtung des E-Motors entbehrlich wird. Der dafür erforderliche technische Aufwand ist gering. Auch der Bauraumbedarf ist klein.

Zur Lösung der Aufgabe ist auch ein Antrieb für ein Kraftfahrzeug mit einem Verbrennungsmotor und einem Getriebe vorgesehen, wobei Verbrennungsmotor und Getriebe durch eine erste Verbrennungsmotor - Getriebe - Kupplung gekuppelt sind. Der Antrieb umfasst einen Elektromotor (E-Motor), mit dem der Verbrennungsmotor gestartet werden kann. Es gibt eine zweite E-Motor - Getriebe - Kupplung, durch die der Elektromotor, also der E-Motor, mit dem Getriebe gekuppelt werden kann.

Da der Verbrennungsmotor und das Getriebe durch eine erste Verbrennungsmotor - Getriebe - Kupplung gekuppelt werden können, kann eine Übertragung eines Drehmoments von dem Verbrennungsmotor zum Getriebe durch Auskuppeln verhindert oder eine Übertragung eines Drehmoments von dem Verbrennungsmotor zum Getriebe durch Einkuppeln bewirkt werden.

Da der Elektromotor und das Getriebe durch eine zweite E-Motor - Getriebe - Kupplung gekuppelt werden können, kann eine Übertragung eines Drehmoments von dem E-Motor zum Getriebe durch Auskuppeln verhindert oder eine Übertragung eines Drehmoments von dem E-Motor zum Getriebe durch Einkuppeln bewirkt werden.

Das Getriebe kann also wahlweise durch den E-Motor oder durch den Verbrennungsmotor angetrieben werden. Durch einen solchen Antrieb kann ein Kraftfahrzeug rein elektrisch fahren oder aufgrund des Verbrennungsmotors. Der zusätzliche Bauraumbedarf für den E-Motor ist zumindest sehr gering, da der E-Motor eine Doppelfunktion übernimmt. Einerseits dient er wie ein konventioneller Anlasser für ein Starten des Verbrennungsmotors. Darüber hinaus ermöglicht der E-Motor das rein elektrische Fahren eines Kraftfahrzeugs.

Grundsätzlich kann der E-Motor mit einem jeden Gangrad des Getriebes gekuppelt werden. In einer Ausgestaltung der Erfindung ermöglicht die E-Motor - Getriebe - Kupplung ein Kuppeln zwischen dem Elektromotor und dem zweiten Gang, dem dritten Gang oder dem Rückwärtsgang des Getriebes. Im Fall eines Schaltgetriebes überträgt der E-Motor dann im eingekuppelten Zustand ein Drehmoment beispielweise auf das Gangrad des zweiten Gangs, des dritten oder auch eines höheren, z.B. 4., 5. Oder 6. Gangs oder des Rückwärtsgangs des Getriebes. Eine so vorgesehene E-Motor - Getriebe - Kupplung ermöglicht in idealer Weise ein rein elektrisches Fahren in Innenstädten bei den hier zu beachtenden moderaten Geschwindigkeiten, die nur sehr selten 70 km/h übersteigen. Auch sind diese Gänge für Entfernungen ausgelegt, die ein regelmäßiges Fahren von relativ kurzen Distanzen erlauben, wie diese in Innenstädten üblicherweise zurückgelegt werden.

Bei einem Schaltgetriebe werden Drehzahlübersetzungen durch Zahnradpaare erzielt. Diese Zahnräder sind an Wellen des Getriebes angebracht, die Getriebeeingangswelle und Triebwelle oder Hauptwelle und Vorgelegewelle genannt werden. So werden beispielsweise Zahnräder auf der Hauptwelle eines Schaltgetriebes zum Schalten derart verschoben, dass ein Zahnrad in ein gegenüberliegendes Zahnrad auf der Vorgelegewelle des Schaltgetriebes eingreift. Alternativ kann die Hauptwelle über eine Klauenkupplung mit dem Getriebeeingang verbunden werden. Dies ist regelmäßig beim dritten Gang der Fall. Geschaltet wird durch eine Schaltmechanik im Getriebe. Diese Mechanik im Getriebe ist wiederum über ein Gestänge oder Seilzug mit einem Schalthebel verbunden. Die vorliegende Erfindung ist besonders für solche Schaltgetriebe geeignet.

Vorzugsweise kann nur ein Gang des Getriebes, und somit beispielsweise nur der zweite Gang, nur der dritte Gang oder nur der Rückwärtsgang mit dem Elektromotor durch die zweite Kupplung gekuppelt werden, um den technischen Aufwand gering zu halten.

In einer Ausgestaltung der Erfindung ist der E-Motor an dem Gehäuse befestigt, in dem sich das Getriebe befindet. In diesem Gehäuse befindet sich dann zugleich auch das Schwungrad. Eine solche Ausgestaltung bezieht sich also auf den eingangs genannten Fall, dass ein Anlasser bereits an dem Gehäuse des Getriebes bei einem vorhandenen Fahrzeug und damit bei einem vorhandenen Antrieb befestigt ist. Eine Nachrüstung ist in solchen Fällen möglich, ohne zusätzlichen Bauraum für einen E-Motor bereitstellen zu müssen. Es kann nämlich der konventioneller Anlasser dann durch einen geeignet ausgelegten Elektromotor ausgetauscht werden, der innerhalb des Gehäuses mit einem Gang des Getriebes durch die zweite Kupplung gekuppelt werden kann. Insbesondere bei Anlassern älterer Bauart muss kein E-Motor eingesetzt werden, dessen Volumen das Volumen des ursprünglich vorhandenen Anlassers älterer Bauart übersteigt.

Es gibt Kraftfahrzeuge, bei denen der Anlasser nicht am Getriebe, sondern am Verbrennungsmotor sitzt. In einem solchen Fall wird wiederum der E-Motor bevorzugt gegen den Anlasser ausgetauscht und kann dann ebenfalls auf die Schwungscheibe bzw. das Schwungrad und in das Getriebe eingreifen. In einem solchen Fall weist der E-Motor grundsätzlich nur ein Wellenende auf, das aus dem E-Motor herausgeführt ist.

Die Antriebswelle des E-Motors ist dann in einer vorteilhaften Ausgestaltung zweigeteilt. Die beiden Teile der Welle können über eine Längsverzahnung (Pos 25) drehfest sowie längsverschieblich miteinander gekoppelt sein. Andere Kopplungsmöglichkeiten sind möglich. So kann am an einem innen liegenden Wellenende eine Klauenkupplung vorhanden sein, wie diese bei den Gangrädern (Losrädern) im Getriebe eingesetzt werden.

In einer Ausgestaltung der Erfindung ist der E-Motor so ausgelegt, dass dieser mit einer elektrischen Spannung von weniger als 100 Volt, bevorzugt weniger als 50 Volt betrieben werden kann. Indem auf eine Hochspannung für den Betrieb des Elektromotors verzichtet wird, müssen keine zusätzlichen Sicherheitsmaßnahmen ergriffen werden, für die Bauraum bereitgestellt werden müsste. Auch hierdurch wird erreicht, dass praktisch kein zusätzlicher Bauraum benötigt wird im Vergleich zum Bauraum, der für einen üblichen Anlasser vorgesehen ist.

Für ein Nachrüsten wird grundsätzlich ein modifiziertes Getriebegehäuse mit Eingriffsfenster für den Krafteingriff auf eines der Gangräder des Getriebes vorgesehen. Ein Umrüsten umfasst also, dass bei einem Getriebegehäuse eines vorhandenen Kraftfahrzeugs zumindest ein Gehäuseteil durch ein Gehäuseteil mit Eingriffsfenster ersetzt wird. Der E-Motor wird mit einem Gang des Getriebes gekuppelt und befestigt.

Bei erhöhtem Leistungsbedarf oder falls ein zur Verfügung stehender Bauraum zwischen Getriebe und Unterboden zu knapp für einen E-Motor einer gewünschten Leistung ist, werden in einer vorteilhaften Ausgestaltung zwei E-Motoren als Antrieb vorgesehen. Die beiden E-Motoren können vorteilhaft miteinander gekoppelt sein, um so mit geringem Bauraum gemeinsam eine Kraft für einen Antrieb des Fahrzeugs bereitzustellen.

Ein zweiter E-Motor ist in einer Ausgestaltung neben dem im Anlassersitz befindlichen ersten Elektromotor angeordnet. Insbesondere bei dieser Ausgestaltung sind erster und zweiter E - Motor miteinander gekoppelt, um so gemeinsam eine Kraft für einen Antrieb des Fahrzeugs bereitzustellen.

Ein zweiter E-Motor ist in einer Ausgestaltung seitlich neben einem Anlassersitz angeordnet. In der Regel steht hier hinreichend Bauraum zur Verfügung. In diesem Fall wird der zweite E-Motor insbesondere mit dem Anlasserritzel gekoppelt, um so eine Kraft für einen Antrieb des Fahrzeugs bereitzustellen.

Der E-Motor kann durch die E-Motor-Getrieb-Kupplung mit einer Abtriebswelle des Getriebes gekuppelt werden. Diese Ausgestaltung ist insbesondere bei Fahrzeugen mit Automatikgetrieben vorgesehen.

Bei Fahrzeugen mit Automatikgetriebe gibt es solche, bei denen die Abtriebskraft aus dem Schaltwerk auf das Ausgleichsgetriebe über eine außenliegende sogenannte Seitenwelle geleitet wird. Bei einigen Fahrzeugtypen liegt diese Seitenwelle außen unten seitlich parallel zum Getriebegehäuse. Solche Getriebe sind unter der der Marke Tiptronic ^{®} bekannt. Erfindungsgemäß erfolgt eine Krafteinleitung vom E-Motor vorteilhaft auf diese außenliegende Seitenwelle.

Die Kraftübertragung auf diese Seitenwelle kann dann in einer vorteilhaften Ausgestaltung über einen Riementrieb oder einen Kettentrieb erfolgen, was technisch wenig aufwendig ist. Es wird bei dieser Ausgestaltung vorteilhaft noch eine Kopplung im Fluss der Seitenwelle vorgesehen, die auszukoppeln ist, wenn das Fahrzeug elektrisch fährt, damit das Getriebe nicht mitgeschleppt werden mus s. Vorteilhaft dabei ist bei einigen Fahrzeugtypen, dass der E-Motor und die Seitenwelle auf der gleichen Seite des Getriebes sitzen.

Bei einigen Fahrzeug-Getriebetypen liegen der Anlassersitz und die Seitenwelle nicht auf der gleichen Seite des Getriebes, so dass die Kraftübertragung vom E-Motor auf die Seitenwelle aufwendig ist oder platzmäßig gar nicht möglich ist. In diesen Fällen kann der E-Motor an anderer Stelle platziert werden, wobei der bestehende Anlasser erhalten bleibt. Dann entfallen die Anlasserfunktion und die entsprechenden Bauteile des E-Motors. Eine geänderte Halterung des E-Motors am Getriebegehäuse wird dann vorgesehen. Steuerungsmäßig wird in einer Ausgestaltung eine dafür besonders geeignete Schaltungsänderung vorgesehen.

Es zeigen:
- Figur 1:: Getriebe mit E-Motor für getriebeseitige Anflanschung;
- Figur 2:: Motorblock mit E-Motor für motorseitige Anflanschung;
- Figur 3:: E-Motor für getriebeseitige Anflanschung;
- Figur 4:: E-Motor für motorseitige Anflanschung.

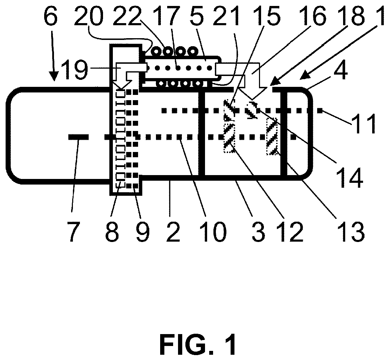

Die Figur 1 zeigt ein Getriebe mit einem aus Metall bestehenden Getriebegehäuse 1, welches aus mehreren Gehäuseteilen 2, 3, 4 besteht. Die Gehäuseteile 2, 3, 4 sind durch Schraubverbindungen miteinander lösbar verbunden. Ein E-Motor 5 ist anstelle eines Anlassers am Getriebegehäuse 1 festgeschraubt. Dieser E-Motor 5 ist so ausgelegt, dass damit ein übliches Kraftfahrzeug rein elektrisch angetrieben mit ortsüblichen Geschwindigkeiten gefahren werden kann. Die für den Betrieb des E-Motors 5 benötigte Spannung beträgt 48 V.

Mit dem Getriebe ist ein Verbrennungsmotor 6 verbunden, der sich in einem aus Metall bestehenden Motorgehäuse befindet. Eine Kurbelwelle 7 ist im Motorgehäuse vorhanden und wird durch den Verbrennungsmotor 6 angetrieben. Ein Schwungrad 8 ist an einem Ende der Kurbelwelle 7 drehfest mit der Kurbelwelle 7 verbunden. An das Schwungrad schließt sich eine Motor-Getriebe-Kupplung 9 an, die die Kurbelwelle 7 mit einer Getriebeeingangswelle 10 kuppeln kann. Die Motor-Getriebe-Kupplung 9 kann eine eingekuppelte und eine ausgekuppelte Stellung einnehmen. In der eingekuppelten Stellung werden eine Drehbewegung und damit ein Drehmoment von der Kurbelwelle 7 auf die Getriebeeingangswelle 10 übertragen. In der ausgekuppelten Stellung wird eine Drehbewegung der Kurbelwelle 7 nicht auf die Getriebeeingangswelle 10 übertragen.

Das Getriebe umfasst eine Triebwelle 11. An der Getriebeeingangswelle 10 sind Gangräder 12 und 13 und an der Triebwelle 11 sind Gangräder 14 und 15 angebracht. Die Gangräder 12 und 15 sind dauerhaft miteinander verzahnt und daher dauerhaft gekoppelt, so dass sich die beiden Gangräder 12 und 15 nur gemeinsam drehen können. Durch eine Verschiebebewegung kann das Gangrad 13 mit dem Gangrad 14 verzahnt werden. Ist das das Gangrad 13 mit dem Gangrad 14 verzahnt, so können die beiden dann miteinander gekoppelten Gangräder 13 und 14 nur gemeinsam gedreht werden.

Das Gangrad 12 ist ein Losrad. Dieses kann durch einen entsprechenden Kupplungsvorgang drehfest mit der Getriebeeingangswelle 10 verbunden werden. Umgekehrt kann die drehfeste Verbindung durch einen entsprechenden Kupplungsvorgang gelöst werden. Dann kann sich das Losrad 12 unabhängig von der Getriebeeingangswelle 10 drehen.

Die anderen Gangräder 13, 14, 15 sind Festräder. Die Gangräder 14 und 15 sind also dauerhaft mit der Triebwelle 11 drehfest verbunden. Das Gangrad 13 ist dauerhaft drehfest mit der Getriebeeingangswelle 10 verbunden.

Ist das Losrad 12 drehfest mit der Getriebeeingangswelle 10 durch einen Kupplungsvorgang verbunden worden, so werden eine Drehbewegung und ein Drehmoment von der Getriebeeingangswelle 10 auf das Festrad 15 und damit auf die Triebausgangswelle 11 übertragen. Diese Drehbewegung und das zugehörige Drehmoment der Triebausgangswelle 11 werden dann auf Räder des zugehörigen Kraftfahrzeugs übertragen, was ein Fahren des Kraftfahrzeugs mit dem so eingelegten Gang zur Folge hat, der beispielsweise der zweite Gang ist.

Die Gangräder 13 und 14 bilden im gekoppelten Zustand einen anderen eingelegten Gang, so zum Beispiel einen eingelegten dritten Gang. Werden also die beiden Gangräder 13 und 14 durch Verschieben von der in der Figur 1 gezeigten nicht miteinander gekoppelten Stellung relativ zueinander so verschoben, dass diese miteinander verzahnt werden, so fährt anschließend ein zugehöriges Kraftfahrzeug im dritten Gang, wenn der Verbrennungsmotor 6 die Kurbelwelle 7 antreibt und die Motor-Getriebe-Kupplung 9 eingekuppelt ist.

Eine E-Motor - Getriebe - Kupplung 16 ist einerseits mit einer Welle 16 des E-Motors 5 verbunden und andererseits mit dem Festrad 14 der Triebwelle 11. Befindet sich die E-Motor - Getriebe - Kupplung 16 im eingekuppelten Zustand, so werden eine Drehbewegung der Welle 17 des E-Motors 5 sowie ein zugehöriges Drehmoment auf das Festrad 14 übertragen. Da das Festrad 14 immer mit der Triebwelle 11 drehfest verbunden ist, dreht sich dann zwingend auch die Triebwelle 11, die so für ein Fahren des Kraftfahrzeugs rein elektrisch angetrieben werden kann.

Wird die Triebwelle 11 elektrisch angetrieben, so wird durch eine Steuerungseinrichtung sichergestellt, dass es keinen eingelegten Gang des Getriebes gibt. Die Gangräder 13 und 14 sind also nicht miteinander verzahnt. Das Losrad 12 befindet sich in seiner gelösten Stellung, in der das Losrad 12 nicht drehfest mit der Getriebeeingangswelle 10 verbunden ist. Es kann also dann die Drehbewegung der Triebwelle 11 nicht auf die Getriebeeingangswelle 10 übertragen werden, um nachteilhafte Leistungsverluste zu vermeiden.

Damit der E-Motor 5 mit dem Getriebe gekuppelt werden kann, umfasst das Gehäuseteil 3 ein Eingriffsfenster 18, also eine Öffnung, durch die zumindest eine Komponente der E-Motor - Getriebe - Komponente 16 hindurch reichen kann.

Es ist eine E-Motor - Schwungrad - Kupplung 19 für ein Kuppeln der Welle 17 des E-Motors mit dem Schwungrad 8 vorhanden. Es handelt sich um eine für Anlasser übliche Kupplung. Im eingekuppelten Zustand der E-Motor - Schwungrad - Kupplung 19 werden eine Drehbewegung der Welle 17 nebst Drehmoment auf das Schwungrad 8 übertragen. Im ausgekuppelten Zustand der E-Motor - Schwungrad - Kupplung 19 findet eine Übertragung einer Drehbewegung der Welle 17 auf das Schwungrad 8 nicht statt.

Der E-Motor 5 umfasst an einer Stirnseite einen Flansch 20, der mithilfe von Schrauben in für Anlasser üblicher Weise an dem dafür vorgesehenen Gehäuseteil 2 festgeschraubt ist. Der E-Motor 5 ist über eine Befestigungseinrichtung 21 zusätzlich an dem mittleren Gehäuseteil 3 befestigt. Um den E-Motor 5 wird ein Schlauch oder Rohr 22 herumgeführt, der mit dem Behälter für Motoröl verbunden ist, um ein Kühlen des E-Motors 5 mit dem Öl und umgekehrt ein Erwärmen des Motoröls mit dem Elektromotor zu ermöglichen.

Der erfindungsgemäße Nachrüstsatz umfasst den E-Motor 5 nebst Flansch 20, die E-Motor - Getriebe - Kupplung 16, das mittlere Gehäuseteil 3, die Befestigungseinrichtung 21 und den Schlauch bzw. das Rohr 22. Der erfindungsgemäße Nachrüstsatz kann außerdem ganz oder teilweise die E-Motor - Schwungrad - Kupplung 19 umfassen. Das mittlere Gehäuseteil 3 kann mit ein oder mehreren Komponenten der Befestigungseinrichtung 21 dauerhaft fest verbunden sein. Auch der E-Motor 5 kann mit ein oder mehreren Komponenten der Befestigungseinrichtung 21 dauerhaft fest verbunden sein.

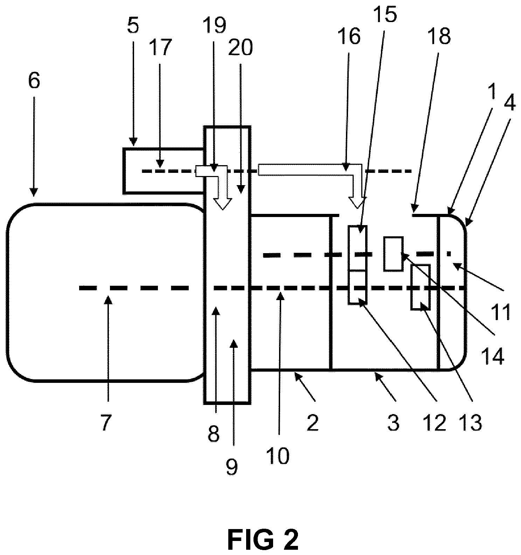

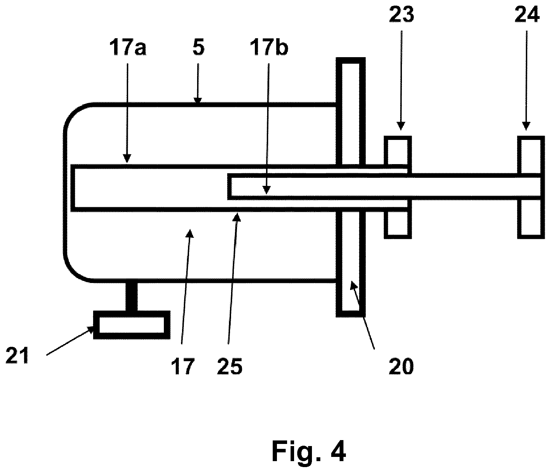

Die Figur 2 zeigt einen Verbrennungsmotor 6 mit einem aus Metall bestehenden Motorgehäuse und einem Getriebe, welches aus mehreren Gehäuseteilen 2, 3, 4 besteht. Die Gehäuseteile 2, 3, 4 sind durch Schraubverbindungen miteinander lösbar verbunden. Ein E-Motor 5 ist anstelle eines Anlassers festgeschraubt und zwar in gleicher Weise wie ein ursprünglich vorhandener Anlasser. Der E-Motor 5 befindet sich abweichend von dem in der Figur 1 gezeigten Fall beim Verbrennungsmotor 6. Der E-Motor 5 kann vorteilhaft zusätzlich am Gehäuse des Verbrennungsmotors 6 befestigt sein. Er kann dafür wie in der Figur 4 gezeigt eine dafür vorgesehene Befestigungseinrichtung 21 umfassen. Die Funktionen der Krafteinleitung ins Getriebe sind in vergleichbarer Weise wie bei der anderen Bauform ("E-Motor am Getriebe") gestaltet. Im Unterschied zu dem in der Figur 1 gezeigten Fall ist die Welle 17 nur an einer Seite aus dem E-Motor 5 herausgeführt.

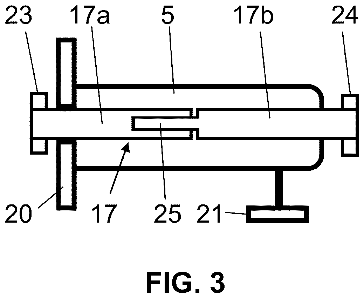

Die Figur 3 zeigt einen Schnitt durch eine Ausführungsform des im Fall der Figur 1 eingesetzten E-Motors 5. Eine zweigeteilte Motorwelle 17 des E-Motors ist vorgesehen, die in zwei separate, konzentrisch laufende Wellen 17a und 17b unterteilt ist. Die zwei separaten, konzentrisch laufenden Wellen 17a und 17b sind die Längsrichtung gegeneinander axial verschiebbar. Sie können über eine Längsverzahnung 25 drehfest verbunden werden. Es gibt einen nicht dargestellten separat steuerbaren Verschiebe-Antrieb für den einen Teil 17a oder 17b der zweigeteilten Motorwelle 17 derart, dass das Anlasserritzel 23 und/oder das Antriebsritzel 24 in Arbeitsposition in einen eingekuppelten Zustand gebracht werden Können, der die Übertragung eines Drehmoments ermöglicht.

Die Figur 4 zeigt einen Schnitt durch eine Ausführungsform des im Fall der Figur 2 eingesetzten E-Motors 5. Eine zweigeteilte Motorwelle 17 des E-Motors 5 ist vorgesehen, die in zwei separate, konzentrisch laufende Wellen 17a und 17b unterteilt ist, die in Längsrichtung gegeneinander axial verschiebbar sind und die über eine Längsverzahnung 25 drehfest verbunden werden können. Es gibt einen nicht dargestellten separat steuerbaren Verschiebe-Antrieb für den einen Teil 17a oder 17b der zweigeteilten Motorwelle 17 derart, dass das Anlasserritzel 23 und/oder das Antriebsritzel 24 in Arbeitsposition in einen eingekuppelten Zustand gebracht werden können, der die Übertragung eines Drehmoments ermöglicht. Mit einer Befestigungseinrichtung 21, die einen Flansch umfassen kann, wird der E-Motor 5 an dem Gehäuse des Verbrennungsmotors 6 befestigt. Darüber hinaus gibt es einen Flansch 20, der eine Befestigung ermöglicht, die mit der Befestigung eines ursprünglich vorhandenen Anlassers übereinstimmt.

## Patentansprüche

1. Kraftfahrzeug mit einem Verbrennungsmotor, welches nachträglich mit einem Nachrüstsatz umfassend einen zusätzlichen elektrischen Antrieb ausgerüstet worden ist,
wobei der Nachrüstsatz einen E-Motor (5) und ein Getriebegehäuse (1) mit Eingriffsfenster (18) oder ein Teil (2, 3, 4) eines Getriebegehäuses mit Eingriffsfenster (18) für ein Kraftfahrzeuggetriebe des vorhandenen Kraftfahrzeugs sowie eine E-Motor - Getriebe - Kupplung (16) umfasst, durch die der E-Motor (5) mit einem Gang des Kraftfahrzeuggetriebes des vorhandenen Kraftfahrzeugs oder mit einer Abtriebswelle des Kraftfahrzeuggetriebes des vorhandenen Kraftfahrzeugs gekuppelt werden kann,
wobei das Kraftfahrzeug eine Steuereinrichtung umfasst, die während eines rein elektrischen Fahrens einen Schalthebel der Gangschaltung fixiert.

## Claims

1. Motor vehicle with an internal combustion engine which has been retrofitted with a retrofit kit comprising an additional electric drive, wherein the retrofit kit comprises an electric motor (5) and a transmission housing (1) with an engagement window (18) or a part (2, 3, 4) of a transmission housing with an engagement window (18) for a motor vehicle transmission of the existing motor vehicle as well as an electric motortransmission coupling (16), by means of which the electric motor (5) can be coupled to a gear of the motor vehicle transmission of the existing motor vehicle or to an output shaft of the motor vehicle transmission of the existing motor vehicle, wherein the motor vehicle comprises a control device which fixes a shift lever of the gear shift during purely electric driving.

## Revendications

1. Véhicule à moteur avec un moteur à combustion interne, qui a été équipé ultérieurement d'un kit d'équipement comprenant un entraînement électrique supplémentaire, dans lequel le kit d'équipement comprend un moteur électrique (5) et un carter de boîte de vitesses (1) avec une fenêtre d'engrènement (18) ou une partie (2, 3, 4) d'un carter de boîte de vitesses avec une fenêtre d'engrènement (18) pour une boîte de vitesses de véhicule à moteur du véhicule à moteur existant ainsi qu'un accouplement moteur électrique - boîte de vitesses (16), par lequel le moteur électrique (5) peut être couplé à une vitesse de la boîte de vitesses du véhicule à moteur existant ou à un arbre de sortie de la boîte de vitesses du véhicule à moteur existant, dans lequel le véhicule à moteur comprend un dispositif de commande qui fixe un levier de changement de vitesse de la boîte de vitesses pendant une conduite purement électrique.
